(19) Europäisches Patentamt

European Patent Office

Office européen des brevets

(11) Veröffentlichungsnummer: **0 528 321 B1**

## EUROPÄISCHE PATENTSCHRIFT

(45) Veröffentlichungstag der Patentschrift: **22.02.95**

(51) Int. Cl.⁶: **B23K 37/04**

(21) Anmeldenummer: **92113611.5**

(22) Anmeldetag: **10.08.92**

(54) **Vorrichtung zum Einsetzen und Einschweissen von flachen Formteilen in Ausnehmungen von Platinen.**

(30) Priorität: **17.08.91 DE 4127271**

(43) Veröffentlichungstag der Anmeldung:
**24.02.93 Patentblatt 93/08**

(45) Bekanntmachung des Hinweises auf die
Patenterteilung:
**22.02.95 Patentblatt 95/08**

(84) Benannte Vertragsstaaten:
**AT BE CH DK ES FR GB GR IE IT LI LU MC NL
PT SE**

(56) Entgegenhaltungen:
**EP-A- 0 350 602
US-A- 2 475 772
US-A- 3 799 007
US-A- 5 020 716**

(73) Patentinhaber: **Thyssen Stahl Aktiengesellschaft
Kaiser-Wilhelm-Strasse 100
D-47166 Duisburg (DE)**

(72) Erfinder: **Sturm, Joseph
Kollwitzstrasse 6
W-4100 Duisburg 18 (DE)**
Erfinder: **Prange, Wilfried
Oleanderweg 20
W-4220 Dinslaken (DE)**
Erfinder: **Schachheim, Hans
Am Ringwall 21
W-4224 Hünxe (DE)**

(74) Vertreter: **Cohausz & Florack Patentanwälte
Postfach 33 02 29
D-40435 Düsseldorf (DE)**

## Beschreibung

Um bei Bauteilen aus Blech unter Berücksichtigung ihrer örtlich unterschiedlichen Beanspruchung zu einer optimalen Auslegung zu kommen, ist es bekannt, in Platinen ein flaches Formteil aus einem anderen Material oder mit unterschiedlicher Dicke einzuschweißen. Dazu werden in eine Platine eine Ausnehmung und ein dazu passendes flaches Formteil geschnitten. Für verschiedene Schweißverfahren, wie Laserschweißen, wird gefordert, daß der Schweißspalt höchstens eine Breite b = 0,05 x s (s = Brennfleck) betragen darf. Bei einer derart kleinen Spaltweite ist das Einsetzen der Formteile in die Ausnehmungen schwierig.

Die Erfindung betrifft eine Vorrichtung zum Einsetzen und Einschweißen von flachen Formteilen in Ausnehmungen von Platinen, mit der auch bei sehr kleinen Spaltbreiten das Einsetzen der Formteile problemlos möglich ist.

Die erfindungsgemäße Vorrichtung besteht aus:
a) Einem Spanntisch mit Halteelementen zum Festlegen der Platine,
b) einer über dem Spanntisch heb- und senkbar angeordneten, kombinierten Zentriervorrichtung für die Platine und das Formteil mit synchron angetriebenen Zentrierelementen, die unterseitig in einer Ausnehmung der Platine einführbare, am Innenrand der Ausnehmung angreifende Spreizfinger und oberseitig am Außenrand des Formteils angreifende Zentrieranschläge aufweisen,
c) einem im Bereich der Zentrierelemente über dem Spanntisch heb- und senkbar angeordneten, an der Oberseite des Formteils angreifenden Halter, **und**
d) einer relativ zur Platine mit dem eingesetzten Formteil und längs der von Platine und Formteilen gebildeten Fuge verfahrbaren Schweißeinrichtung.

Mit der erfindungsgmäßen Vorrichtung läßt sich problemlos ein einfaches Formteil in die Ausnehmung der Platine einsetzen, weil die kombinierte Zentriervorrichtung an der Ausnehmung ausgerichtet und in Abhängigkeit von dieser Ausrichtung die Ausrichtung des Formteils erfolgt. Damit ist ein direkter Bezug zwischen der Ausnehmung in der festgespannten Platine und dem vom Halter festgehaltenen Formteil hergestellt. Bei festliegender Platine läßt sich dann der Schweißstrahl exakt längs der Fuge führen.

Um die Zugänglichkeit zu der Platine mit dem mittels des Halters eingesetzten Formteils von oben zu erleichtern, ist nach einer Ausgestaltung der Erfindung vorgesehen, daß im Bereich der Zentrierelemente und im wesentlichen niveaugleich mit der Oberseite des Spanntisches eine an der Unterseite des Formteils angreifende Stütz- und Halteplatte angeordnet ist. Diese Stütz- und Halteplatte erlaubt die Freigabe des Formteils durch den oberseitigen Halter, ohne daß darunter die passungsgerechte Lage des Formteils in der Platine leidet.

Um den Schweißstrahl längs der Fuge entlang fahren zu können, ist vorzugsweise der Spanntisch drehbar gelagert. Diese Ausgestaltung erlaubt eine ortsfeste Positionierung der Schweißvorrichtung. Unter "ortsfest" wird auch noch eine Anordnung der Schweißvorrichtung verstanden, die eine Schwenkbewegung erlaubt, um sich der Lage der Schweißfuge anzupassen, was vor allem dann notwendig ist, wenn die Schweißfuge nicht konzentrisch zur Drehachse des Spanntisches verläuft.

Eine leicht lösbare und stufenlos wirkende Fixierung für die Platine und das Formteil besteht darin, daß die Halteelemente und/oder der Halter und/oder die Stütz- und Halteplatte elektromagnetisch aktivierbar sind. Diese Art der Aktivierung funktioniert natürlich nur bei ferromagnetischem Material der Platine und des Formteils.

Nach einer bevorzugten Ausgestaltung der Erfindung sind mehrere gleichartige Spanntische nach Art eines Karussells auf einem Drehtisch angeordnet und nacheinander schrittweise an verschiedene ortsfeste Stationen bewegbar, und zwar eine Aufgabestation für die Platine, eine die Zentriervorrichtung umfassenden Zentrierstation für die Platine und das Formteil, eine Schweißstation und eine Austragstation. Bei dieser Art der Ausgestaltung der erfindungsgemäßen Vorrichtung lassen sich an den verschiedenen Stationen verschiedene Arbeiten parallel zueinander im Sinne eines erhöhten Ausstoßes ausführen.

Um eine mögliche Verformung der Platine beim Einschweißen des Formteils infolge möglicherweise entstehender Wärmespannungen zu vermeiden, kann insbesondere an der Schweißstation eine oberseitig die Platine und das Formstück erfassende und mit dem unterseitigen Spanntisch klemmend zusammenwirkende, vom sich drehenden Spanntisch mitgeschleppten Klemmvorrichtung angeordnet sein.

Im folgenden wird die Erfindung anhand einer ein Ausführungsbeispiel schematisch darstellenden Zeichnung näher erläutert. Im einzelnen zeigen:

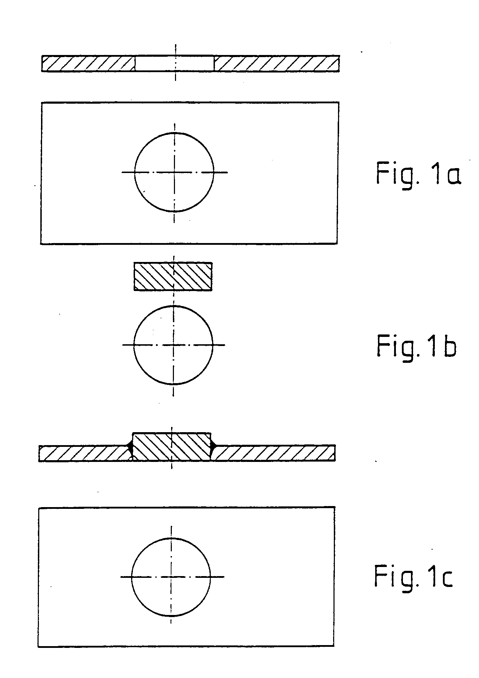

Fig. 1a      eine Platine mit einer kreisförmigen Ausnehmung im Querschnitt und in Aufsicht,

Fig. 1b      ein flaches kreisförmiges Formteil im Querschnitt und in Aufsicht,

Fig. 1c      die Platine gemäß Fig. 1a mit eingeschweißtem Formteil gemäß Fig. 1b im Querschnitt und in Aufsicht,

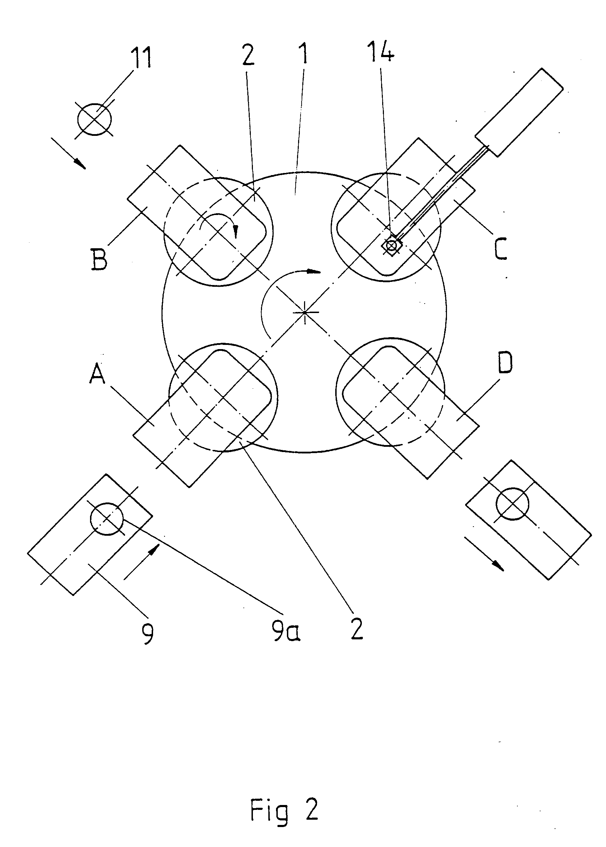

Fig. 2      eine Vorrichtung zum Einsetzen und Schweißen von flachen Formteilen in Ausnehmungen von Platinen in Karussellbauart mit einer Aufgabestation, einer Zentrierstation, einer Schweißstation und einer Austragestation in Aufsicht,

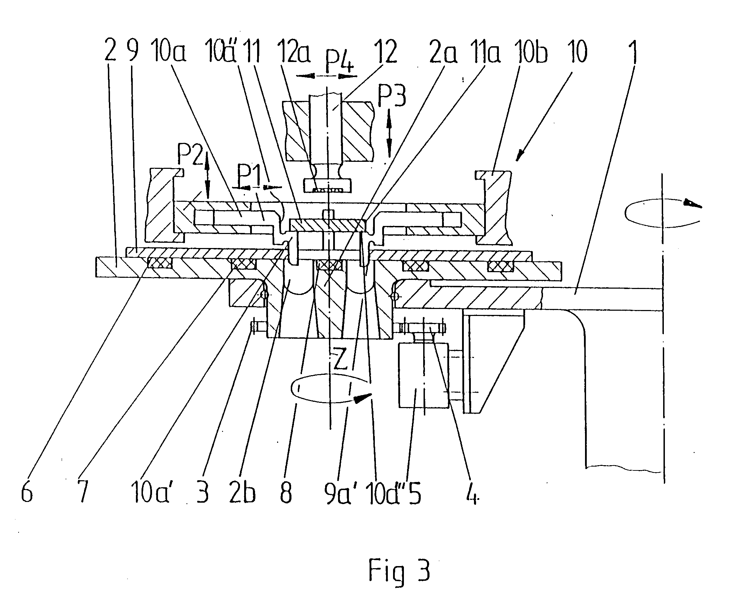

Fig. 3 die Vorrichtung gemäß Fig. 2 im Axialschnitt an der Zentrierstation,

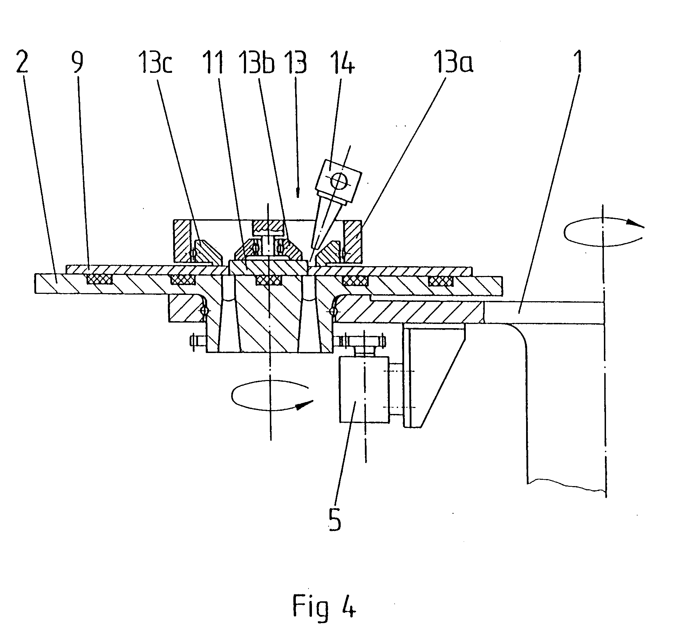

Fig. 4 die Vorrichtung gemäß Fig. 2 im Axialschnitt an der Schweißstation,

Fig. 5 verschiedene Formen von einzuschweißenden Formteilen in Aufsicht **und**

Fig. 6 eine Schweißeinrichtung in Schweißposition an einer Platine mit eingesetztem Formteil im Axialschnitt.

Auf einem Drehtisch 1 sind in Karussellbauart vier gleichartige Spanntische 2 drehbar gelagert. Angetrieben werden die Spanntische 2 über Zahnräder 3,4 von einem Antriebsmotor 5. In der Oberseite des Spanntisches 2 sind Halteelemente 6,7,8 in Form von Elektromagneten eingelagert. Der mittige Teil 2a des Spanntisches 2 ist von dem übrigen Teil des Spanntisches 2 durch eine ringförmige Ausnehmung 2b getrennt.

Wenn sich der Spanntisch 2 an der ersten Station, der Aufgabestation A für eine Platine 9 befindet, wird die Platine 9 mittels einer nicht dargestellten Transportvorrichtung oder auch von Hand auf den Spanntisch 2 mit ihrer Ausnehmung 9a über dem mittigen Teil 2a vorjustiert abgelegt. Dann werden die Elektromagnete 6,7 aktiviert, um die Platine 9 in dieser Position festzuhalten. Danach dreht der Drehtisch 1 um einen Schritt, bis daß der Spanntisch 2 die nächste Station, und zwar die Zentrierstation B, erreicht.

In dieser Station befindet sich über dem Spanntisch 2 eine kombinierte Zentriervorrichtung 10 für die Platine 9 und für ein in die Ausnehmung 9a der Platine 9 einzusetzendes Formteil 11. Die Zentriervorrichtung 10 weist in Richtung des Doppelpfeils P1 synchron angetriebene Zentrierelemente 10a auf, die in einer Führung 10b in Richtung des Doppelpfeils P2 heb- und senkbar sind. Die Position dieser Zentrierelemente 10a ist an der zentralen Drehachse Z des Spanntisches 2 ausgerichtet. Die Zentrierelemente 10a weisen unterseitig in die Ausnehmung 9a der Platine 9 einführbare, am Innenrand der Ausnehmung 9a angreifende Spreizfinger 10a' und oberseitig am Außenrand 11a des Formteils 11 angreifende Zentrieranschläge 10a'' sowie eine Ablage 10a''' für das Formteil 11 auf.

Über dem Spanntisch 2 und oberhalb der Zentriervorrichtung 10 befindet sich ein in Richtung des Doppelpfeils P3 heb- und senkbarer Halter 12, der mit einem Elektromagneten 12a bestückt ist. Dieser Halter 12 ist in Richtung des Doppelpfeils P4 radial zum Drehtisch 1 verfahrbar.

Um einerseits die Platine 9 auf dem Spanntisch 2 zu zentrieren und andererseits das Formteil 11 in die Ausnehmung 9a der Platine 9 einzusetzen, werden zunächst die Elektromagnete 6,7,8 abgeschaltet. Die Zentrierelemente 10a werden radial zusammengefahren. Die Zentriervorrichtung 10 wird dann abgesenkt, so daß deren Spreizfinger 10a' sich innerhalb der Ausnehmung 9a befinden. Anschließend werden die Spreizfinger 10a' mit ihrem synchronen Antrieb radial auseinandergefahren. Dabei stoßen die Spreizfinger 10a' an den Innenrand 9a' der Ausnehmung 9a an und verschieben die Platine 9 in die Zentrierposition. Bei noch haltenden Spreizfingern 10a' werden die Elektromagnete 6,7 wieder eingeschaltet.

In der Zwischenzeit hat der Halter 12 aus einer Position außerhalb des Karussells das Formteil 11 in eine Position oberhalb der Ausnehmung 9a transportiert und auf die Auflage 10a''' der Zentrierelemente 10a abgelegt. Durch ihren synchronen Antrieb werden die Zentrierelemente 10a radial zusammengefahren, bis daß die Zentrieranschläge 10a'' das Formteil 11 am Außenrand 11a allseitig erfassen und dadurch in die gewünschte zentrierte Position bringen. Danach wird der Halter 12 bis auf das Formteil 11 abgesenkt und der Elektromagnet 12a eingeschaltet. Nach Lösen der Zentrierelemente 10a wird das vom Halter 12 festgehaltene Formteil 11 bis über die Zentriervorrichtung 10 angehoben. Die Zentrierelemente 10a werden in Richtung des Pfeils P2 nach oben hochgefahren, bis daß die unteren Enden der Spreizfinger 10a' über dem oberen Niveau der Platine 9 sich befinden. Dann können die Spreizfinger 10 zur Freigabe der Ausnehmung 9a weiter radial nach außen bewegt werden. Bei ausgeschaltetem Elektromagneten 8 wird mit dem Halter 12 das Formteil 11 abgesenkt und in die Ausnehmung 9a eingesetzt, bis daß es auf dem als Stütz- und Halteplatte dienenden mittleren Teil 2a des Spanntisches 2 aufliegt. Der Elektromagnet 8 wird dann zur Fixierung des Formteils 9 eingeschaltet und der Elektromagnet 12a ausgeschaltet. Mit dem Abheben des Halters 12 ist der Zentrier- und Einsetzvorgang beendet. Der Drehtisch 1 schaltet dann einen weiteren Schritt weiter, bis daß der Spanntisch 2 die Schweißstation C erreicht.

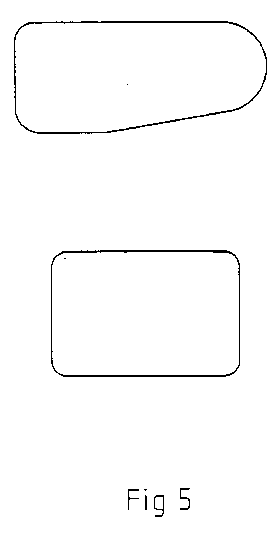

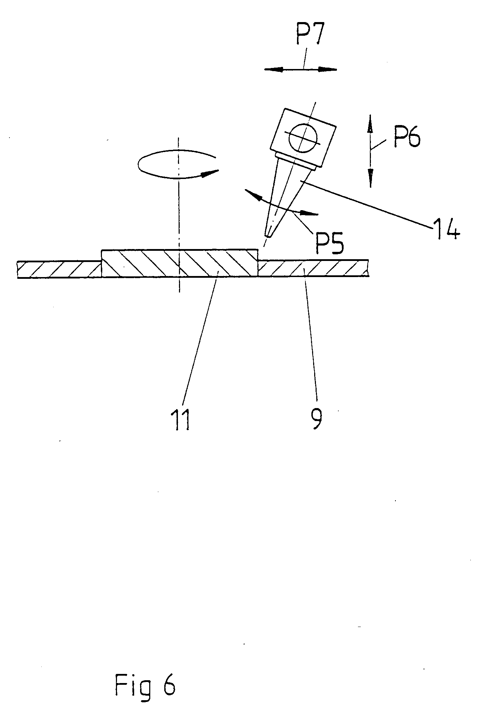

Die Schweißstation C umfaßt eine über dem Spanntisch 2 angeordnete, gegen die Platine 9 und das Formteil 11 absenkbare Klemmvorrichtung 13, mit der die Platine 9 und das Formteil 11 festgeklemmt werden können. Die Klemmvorrichtung 13 weist in einem Träger 13a einen frei drehbar gelagerten mittleren Klemmbacken 13b für das Formteil 11 und eine frei drehbar gelagerte ringförmige Klemmbacke 13c für die Platine 9 auf. Bei angetriebenem Spanntisch 2 werden deshalb die Klemmbacken 13b,13c mitgeschleppt. Die Klemmbacken 13b,13c lassen zwischen sich einen Ringspalt frei, in dem die Fuge zwischen der Platine 9 und dem Formteil 11 liegt. Auf diese Fuge ist eine Schweißstrahleinrichtung 14 gerichtet. Bei kreisförmiger Fuge bleibt die eingestellte Position der Schweißstrahleinrichtung 14 während der Drehung der Spannplatte 2 erhalten. Sofern jedoch andersformatige Schweißfugen, wie in Figur 5 in der Mitte und unten dargestellt sind, ist es notwendig, die Schweißstrahleinrichtung 14 entsprechend der in Figur 6 durch Doppelpfeile P5-P7 dargestellten Freiheitsgrade zu verstellen.

Obgleich die Arbeitsweise der Zentriervorrichtung 10 am Beispiel einer kreisförmigen Ausnehmung 9 beschrieben ist, versteht es sich, daß mit der Zentriervorrichtung 10 auch andersformatige Ausnehmungen und Formteile ausgerichtet werden können. Bei nicht kreisförmigen Formen, wie sie in Figur 5 dargestellt sind, ist es lediglich erforderlich, bei zwei Paar kreuzweise gegenüberliegenden Zentrierelementen die Grundeinstellung für unterschiedliche Weiten vorzunehmen.

**Patentansprüche**

1. Vorrichtung zum Einsetzen und Einschweißen von flachen Formteilen (11) in Ausnehmungen (9a) von Platinen (9), bestehend aus:
   a) Einem Spanntisch (2) mit Halteelementen (6,7,8) zum Festlegen der Platine (9),
   b) einer über dem Spanntisch (2) heb- und senkbar angeordneten, kombinierten Zentriervorrichtung (10) für die Platine (9) und das Formteil (11) mit synchron angetriebenen Zentrierelementen (10a), die unterseitig in die Ausnehmung (9a) der Platine (9) einführbare, am Innenrand (9a') der Ausnehmung (9a) angreifende Spreizfinger (10a') und oberseitig am Außenrand (11a) des Formteils (11) angreifende Zentrieranschläge (10a'') aufweisen,
   c) einem im Bereich der Zentrierelemente (10a) über dem Spanntisch (2) heb- und senkbar angeordneten, an der Oberseite des Formteils (11) angreifenden Halter (12), **und**
   d) einer relativ zur Platine (9) mit dem eingesetzten Formteil (11) und längs der von der Platine (9) und dem Formteil (11) gebildeten Fuge verfahrbaren Schweißeinrichtung (14).

2. Vorrichtung nach Anspruch 1,
   **dadurch gekennzeichnet,** daß im Bereich der Zentrierelemente (10a) und im wesentlichen niveaugleich mit der Oberseite des Spanntisches (2) eine an der Unterseite des Formteils (11) angreifende Stütz- und Halteplatte (2a) angeordnet ist.

3. Vorrichtung nach Anspruch 1 oder 2,
   **dadurch gekennzeichnet,** daß der Spanntisch (2) drehbar ist.

4. Vorrichtung nach einem der Ansprüche 1 bis 3,
   **dadurch gekennzeichnet,** daß die Halteelemente (6,7) und/oder der Halter (12) und/oder die Stütz- und Halteplatte (2a) elektromagnetisch aktivierbar sind.

5. Vorrichtung nach einem der Ansprüche 1 bis 4,
   **dadurch gekennzeichnet,** daß mehrere gleichartige Spanntische (2) nach Art eines Karussells auf einem Drehtisch (1) angeordnet und nacheinander schrittweise an verschiedene, ortsfeste Stationen (A,B,C,D) bewegbar sind, und zwar eine Aufgabestation (A) für die Platine (9), eine die Zentriervorrichtung (10) umfassende Zentrierstation (B) für die Platine (9) und das Formteil (11), eine Schweißstation (C) und eine Austragstation (D).

6. Vorrichtung nach einem der Ansprüche 1 bis 5,
   **dadurch gekennzeichnet,** daß insbesondere in der Schweißstation (C) eine oberseitig die Platine (9) und das Formteil (11) erfassende und mit dem unterseitigen Spanntisch (2) klemmend zusammenwirkende, vom drehenden Spanntisch (2) mitgeschleppten Klemmvorrichtung (13b,13c) angeordnet ist.

**Claims**

1. An apparatus for the insertion and welding of flat shaped parts (11) in recesses (9a) in plates (9), comprising:
   a) a clamping table (2) having retaining elements (6, 7, 8) for securing the plate (9) in position,
   b) a combined centring device (10), disposed vertically adjustably above the clamping table (2), for the plate (9) and the shaped part (11) and having synchronously driven centring elements (10a) whose undersides have expanding fingers (10a') which can be introduced into the recess (9a) in the plate (9) and engage with the inner edge (9a') of the recess (9a), and whose top sides have centring stops (10a'') engaging with the outer edge (11a) of the shaped part (11),
   c) a holder (12) which is disposed vertically adjustably over the clamping table (2) in the zone of the centring elements (10a) and which engages with the top side of the shaped part (11), and

d) a welding device (14) which can be moved in relation to the plate (9) with the inserted shaped part (11) and along the joint formed by the plate (9) and the shaped part (11).

2. An apparatus according to claim 1, characterized in that a supporting and retaining plate (2a) engaging with the underside of the shaped part (11) is disclosed in the zone of the centring elements (10a) and substantially at the same level as the top side of the clamping table (2).

3. An apparatus according to claims 1 or 2, characterized in that the clamping table (2) is rotatable.

4. An apparatus according to one of claims 1 to 3, characterized in that the retaining elements (6, 7) and/or the holder (12) and/or the supporting and retaining plate (2a) can be activated electromagnetically.

5. An apparatus according to one of claims 1 to 4, characterized in that a number of identical clamping tables (2) are arranged carrousel-fashion on a rotary table (1) and can be moved successively in steps to different fixed stations (A, B, C, D), namely a feed station (A) for the plate (9), a centring station (B) comprising the centring device (10) for the plate (9) and the shaped part (11), a welding station (C) and a delivery station (D).

6. An apparatus according to one of claims 1 to 5, characterized in that more particularly at the welding station (C) a clamping device (13b, 13c) is disposed which is entrained by the rotating clamping table (2) and which clampingly cooperates with the underside clamping table (2) and seizes the plate (9) and the shaped part (11) at the top side.

**Revendications**

1. Dispositif de mise en place et soudage de pièce préformées (11) de faible épaisseur dans des évidements (9a) de platines (9), formé :

a) d'une table d'ablocage (2) comportant des éléments de maintien (6, 7, 8) servant à fixer la platine (9),

b) d'un dispositif (10) de centrage combiné de la platine (9) et de la pièce préformée (11) qui est disposé au-dessus de la table d'ablocage (2) de façon à pouvoir être soulevé et abaissé et qui comprend des éléments de centrage (10a) qui sont entraînés d'une manière synchrone et qui comprennent, à leur partie inférieure, des doigts d'écartement (10a'), agencés de façon à pouvoir être introduits dans l'évidement (9a) de la platine (9) et exerçant leur action sur le bord intérieur (9a') de l'évidement (9a), et, à leur partie supérieure, des butées de centrage (10a'') exerçant leur action sur le borde extérieur (11a) de la pièce préformée (11),

c) d'un moyen de maintien (12) disposé dans la zone des éléments de centrage (10a) de façon à pouvoir être soulevé et abaissé au-dessus de la table d'ablocage (2) et exerçant son action sur la face supérieure de la pièce préformée (11) et

d) d'un dispositif de soudage (14) agencé de façon à pouvoir être déplacé vis-à-vis de la platine (9), dans laquelle la pièce préformée (11) est mise en place, et le long de la fente de joint formée par la platine (9) et la pièce préformée (11).

2. Dispositif selon la revendication 1, caractérisé en ce qu'une plaque d'appui et de maintien (2a), exerçant son action sur la face inférieure de la pièce préformée (11), est disposée dans la zone des éléments de centrage (10a) et essentiellement au même niveau que la face supérieure de la table d'ablocage (2).

3. Dispositif selon la revendication 1 ou 2, caractérisé en ce que la table d'ablocage (2) est agencée de façon à pouvoir être déplacée en rotation.

4. Dispositif selon l'une des revendications 1 à 3, caractérisé en ce que les éléments de maintien (6, 7) et/ou le dispositif de maintien (12) et/ou la plaque d'appui et de maintien (2a) sont agencés de façon à pouvoir être rendus actifs par voie électromagnétique.

5. Dispositif selon l'une des revendications 1 à 4, caractérisé en ce que plusieurs tables d'ablocage (2) identiques sont disposées sur une table tournante (1) à la façon d'un carrousel et sont agencées de façon à pouvoir être déplacées successivement et pas-à-pas à différents postes fixes (A, B, C, D), à savoir un poste (A) d'introduction de la platine (9), un poste (B) de centrage de la platine (9) et de la pièce préformée (11), qui contient le dispositif de centrage (10), un poste de soudage (C) et un poste d'évacuation (D).

6. Dispositif selon l'une des revendications 1 à 5, caractérisé en ce qu'il est disposé, notamment dans le poste de soudage (C), un dispositif de serrage (13b, 13c) qui saisit du côté supérieur la platine (9) et la pièce préformée (11) et qui coopère par serrage avec la table d'ablocage (2) située du côté inférieur et est entraîné dans son mouvement par cette table d'ablocage (2) entraînée en rotation.

Fig. 1a

Fig. 1b

Fig. 1c

Fig 2

EP 0 528 321 B1

Fig 3

Fig 4

Fig 5

Fig 6